# EUROPEAN PATENT APPLICATION

(11) **EP 4 779 791 A1**
(43) Date of publication of application: **22.07.2026**
(21) Application number: 25788408.0
(22) Date of filing: 07.01.2025
(51) Int. Cl.: H01M 50/533

(54) **LEAD STRUCTURE AND BATTERY**

(30) Priority: 26.11.2024 CN 202422895091 U
(71) Applicant: HUIZHOU EVE POWER CO., LTD, Huizhou, Guangdong 516039 (CN); Eve Power Co., Ltd., Jingmen, Hubei 448000 (CN)
(72) Inventor: WEI, Chenyang, Guangdong 516039 (CN); SHU, Kuanjin, Guangdong 516039 (CN); AN, Suli, Guangdong 516039 (CN)
(74) Representative: Zhu, Puxing
(86) International application number: PCT/CN2025/070971
(87) International publication number: WO 2026/113125

(57) **Abstract**

A pin structure includes a terminal connecting part and a tab connecting part. The terminal connecting part has a first section and a second section connected to each other, and the first section has a width less than a width of the second section. The tab connecting part is connected, by bending, to a side of the first section in a width direction of the first section, and is spaced apart from the second section. A smooth transition is formed between opposite respective sides of the tab connecting part and the second section in a direction in which the terminal connecting part extends.

## Description

This application claims priority to Chinese patent application No. 202422895091.1, filed with the Chinese Patent Office on November 26, 2024. The disclosure of the abovementioned application is incorporated herein by reference in its entirety.

### TECHNICAL FIELD

The present application relates to the field of battery technology, and in particular to pin structures and batteries.

### BACKGROUND

In the related art, a terminal may be electrically connected to a tab of a cell through a pin structure. Generally, the pin structure is processed into a complex shape (such as an L-shape) and bent, so that the pin structure could be more compatible in space and facilitate connecting the terminal with the tab at different positions in space, thereby realizing the electrical connection between the tab and the terminal.

### SUMMARY

However, the pin structure in such a configuration has corners. Especially at an inner corner thereof, stress concentration occurs, which makes the pin structure easy to crack, thus affecting the structural strength and overcurrent capacity of the pin structure.

The present application provides a pin structure including a terminal connecting part and a tab connecting part. The terminal connecting part has a first section and a second section connected to each other, and the first section has a width less than a width of the second section. The tab connecting part is connected, by bending, to a side of the first section in a width direction of the first section, and is spaced apart from the second section. A smooth transition is formed between opposite respective sides of the tab connecting part and the second section in a direction in which the terminal connecting part extends.

In a possible implementation, the opposite sides of the tab connecting part and the second section define an arcuate transition portion and are smoothly transitioned through the arcuate transition portion, and in a thickness direction of the terminal connecting part, an orthographic projection of the arcuate transition portion is an arc.

In a possible implementation, the orthographic projection of the arcuate transition portion is a circular arc in the thickness direction of the terminal connecting part.

In a possible implementation, the circular arc having a radius R satisfying 1 mm ≤ R ≤ 3 mm.

In a possible implementation, the tab connecting part comprises a body section and a bending section, the tab connecting part is connected, by bending, to the first section through the bending section, the body section is connected to an end of the bending section away from the first section, and opposite sides of the bending section and the second section are smoothly transitioned.

In a possible implementation, the body section comprises a first straight section, a second straight section and a connecting section. The first straight section is connected to an end of the bending section away from the first section. The connecting section is connected to an end of the first straight section away from the bending section. The second straight section is connected to an end of the connecting section away from the first straight section;

the first section is arranged opposite to the connecting section, and the first section, the bent section, the first straight section and the connecting section define an avoidance groove.

In a possible implementation, side surfaces of the first straight section and the bending section are smoothly transitioned.

In a possible implementation, the first straight section has a first side surface close to the second section, and in a thickness direction of the tab connecting part, an orthographic projection of the first side surface is a concave arc.

In a possible implementation, the first straight section has a width gradually increases from a middle to each of two ends of the first straight section in the extending direction of the tab connecting part.

In a possible implementation, the second section is provided with a terminal mounting hole.

In a possible implementation, the terminal mounting hole comprises a first hole section and a second hole section closer to the tab connecting part than the first hole section. The first hole section has a cross-sectional area greater than a cross-sectional area of the second hole section, so that a step is formed between the first hole section and the second hole section.

According to embodiments of the present application, a battery includes a pin structure of any possible implementation described above.

### BENEFICIAL EFFECTS

According to possible implementations of the present application, the terminal connecting part includes a first section and a second section, and the first section connects the second section to the tab connecting part. The first section is narrower and uses less material, which helps to meet the requirement of lightweight design, and the second section is wider, which facilitate connection with the terminal. By setting the opposite sides of the tab connecting part and the second section being transitioned smoothly, the stress is more evenly distributed in the connecting area on the opposite sides of the tab connecting part and the second section, thereby improving the technical issue of stress concentration at the side inner corner of the pin structure which causes the pin structure to crack.

### BRIEF DESCRIPTION OF THE DRAWINGS

FIG. 1 is a schematic perspective view of a pin structure at a first viewing angle according to some embodiments of the present application.
FIG. 2 is a schematic perspective view of a pin structure at a second viewing angle according to some embodiments of the present application.
FIG. 3 is a front view of a pin structure according to some embodiments of the present application.
FIG. 4 is a left view of a pin structure according to some embodiments of the present application.
FIG. 5 is a top view of a pin structure according to some embodiments of the present application.
FIG. 6 schematically shows marking of an arcuate transition portion according to some embodiments of the present application.
FIG. 7 is a schematic diagram of a structure of a battery according to some embodiments of the present application.
FIG. 8 is a schematic diagram of a structure of a battery with a housing thereof removed according to some embodiments of the present application.
FIG. 9 is a left view of the battery shown in FIG. 8.
FIG. 10 is a schematic diagram of a structure of an end cap assembly according to some embodiments of the present application.
FIG. 11 is a top view of the end cap assembly shown in FIG. 10.
FIG. 12 is a cross-sectional view of the end cap assembly taken along line A-A in FIG. 11.
FIG. 13 is an enlarged view of part A in FIG. 12.

List of reference signs: 100, battery; 10, end cap assembly; 11, end cap; 12, terminal; 121, flange; 13, pin structure; 131, tab connecting part; 1311, body section; 13111, first straight section; 131111, first side; 13112, second straight section; 13113, connecting section; 1312, bending section; 1313, avoidance groove; 133, first side surface; 134, second side surface; 135, arcuate transition portion; 132, terminal connecting part; 1321, first section; 1322, second section; 13221, terminal mounting hole; 132211, first hole section; 132212, second hole section; 20, housing; 30, cell; 31, body; 32, tab; 321, straight area; 322, bending area; X, direction in which the terminal connecting part extends.

### DETAILED DESCRIPTION

The technical solutions in some embodiments of the present application will be clearly and completely described below with reference to the accompanying drawings in these embodiments of the present application. Obviously, the described embodiments are only part of the embodiments of the present application, not all of the embodiments. Based on the embodiments of the present application, all other embodiments obtained by those skilled in the art without creative work are within the scope of protection of the present application.

In addition, it should be understood that the specific embodiments described herein are only used for illustrating and explaining the present application, and are not intend to limit the present application. In the present application, unless otherwise stated, the directional words used, such as "upper" and "lower", generally refer to the upper and lower parts of the device in actual use or working state, specifically the drawing direction in the accompanying drawings; while "inner" and "outer" refer to the outline of the device.

The terms "first" and "second" are used for descriptive purposes only and are not to be construed as indicating or implying a relative importance or not to implicitly indicate a number of technical features indicated. Thus, features defined by "first" or "second" may include one or more of the described features either explicitly or implicitly. In the description of the present application, the meaning of "a plurality of" is two or more unless specifically defined otherwise.

In the description of present application, it should be noted that the terms "installation", "connection", and "bonding" are to be understood broadly unless otherwise explicitly defined and limited. For example, it may be fixed connection, detachable connection, or integral connection; being mechanical connection, electrical connection or communication with each other; also, being direct connection, indirect connection through an intermediate medium, internal communication of two elements, or interaction relationship between two elements. The specific meaning of the above terms in the present application can be understood in a specific case by those skilled in the art.

The terms "comprise", "include" or any other variation thereof are intended to cover non-exclusive inclusion, such that a process, method, article, or device that including a series of elements includes not only those elements, but also other elements not explicitly listed, or elements inherent to such process, method, article, or device. In the absence of further limitations, an element defined by the phrase "comprises a ..." does not exclude the presence of additional identical elements in the process, method, article, or device that includes the element.

In the description of the embodiments of the present application, terms such as "example" or "for example" are used for indicating examples, illustrations or descriptions. The use of terms such as "example" or "for example" is intended to present relative concepts in a clear manner.

In the description of the embodiments of the present application, "perpendicular" is not strictly perpendicular, and a certain error is allowed. "Parallel" is not strictly parallel, and a certain error is allowed.

Pin structure, which is one of core parts of a battery, is configured to implement an electrical connection between a terminal and a tab of a cell. A crack of the pin structure will lead to unstable or interrupted electrical connection, affecting the normal operation of the battery. At the same time, unstable electrical connection may cause uneven current distribution, causing local overheating. A long-term overheating will accelerate battery aging and even cause thermal runaway.

In the related art, due to the difference of the positions of the terminal and the tab in space, the pin structure is usually processed into a complex shape (such as an L-shape) and bent to make the pin structure have higher compatibility in space, so that the pin structure can connect the terminal and the tab at different positions in space, thereby realizing the electrical connection between the tab and the terminal. However, there is a corner on a side surface of the pin structure of this structure (i.e., the side inner corner mentioned later), and stress concentration occurs at the corner, which makes the pin structure easy to crack.

In view of this, some embodiments of the present application provides a pin structure 13, which can be a positive pin structure for implementing an electrical connection between a positive terminal and a positive tab, or a negative pin structure for implementing an electrical connection between a negative terminal and a negative tab. The material of the pin structure 13 can be various. For example, the material of the pin structure 13 includes but is not limited to copper, nickel, steel and alloys thereof, etc. The specific structure of the pin structure 13 is described in detail below in conjunction with the accompanying drawings.

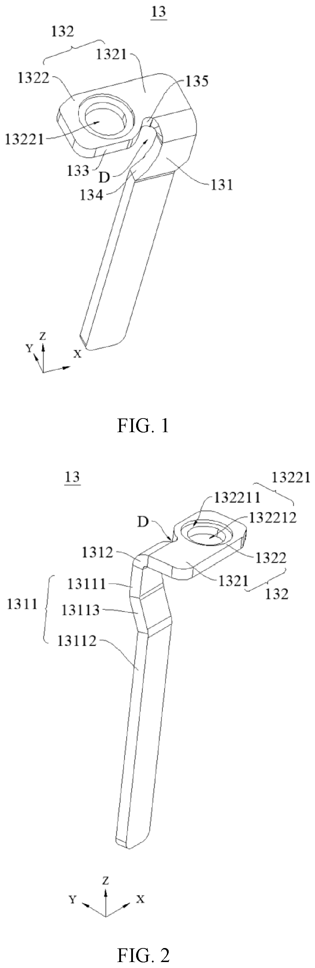

Referring to FIG. 1 to FIG. 5, the pin structure 13 includes a terminal connecting part 132 and a tab connecting part 131. The terminal connecting part 132 is configured to connect to the terminal 12 (mentioned later), and the tab connecting part 131 is configured to connect to the tab 32 (mentioned later) of the cell 30, so that the terminal 12 and the tab 32 are electrically connected through the pin structure 13.

The terminal connecting part 132 has a first section 1321 and a second section 1322 connected to each other. The first section 1321 and the second section 1322 can be arranged in an extending direction (direction X in the figure) of the tab connecting part 131, and the second section 1322 is located on a side of a width direction of the tab connecting part 131.

The first section 1321 has a width less than a width of the second section 1322. It should be noted that the extending direction of the terminal connecting part 132 can be understood as a length direction of the terminal connecting part 132, and the direction perpendicular to the extending direction of the terminal connecting part 132 can be understood as the width direction of the terminal connecting part 132 (direction Y in the figure). The dimension of the first section 1321 in the width direction of the terminal connecting part 132 is the width of the first section 1321. The dimension of the second section 1322 in the width direction of the terminal connecting part 132 is the width of the second section 1322.

The tab connecting part 131 is connected, by bending, to a side of the first section 1321 in the width direction thereof. It should be understood that, through the bending connection, an angle is formed between the tab connecting part 131 and the terminal connecting part 132.

In the extending direction of the terminal connecting part 132, the opposite sides of the tab connecting part 131 and the second section 1322 are smoothly transitioned. The opposite sides of the tab connecting part 131 and the second section 1322 can be understood as two side surfaces of the tab connecting part 131 and the second section 1322 that are close to each other. As shown in FIG. 1, at the side inner corner D of the pin structure 13, the second section 1322 has a first side surface 133 close to the tab connecting part 131, and the tab connecting part 131 has a second side surface 134 close to the second section 1322. The first side surface 133 and the second side surface 134 are the opposite sides of the tab connecting part 131 and the second section 1322. It can be understood that the opposite sides of the tab connecting part 131 and the second section 1322 are smoothly transitioned, that is, through processing, the first side surface 133 and the second side surface 134 have no sudden changes at the connection therebetween, and a smooth connection is achieved.

By setting the terminal connecting part 132 include the first section 1321 and the second section 1322, the first section 1321 connects the second section 1322 to the tab connecting part 131. The first section is narrower than 1321 and uses less material, which helps to meet the requirement of lightweight design of the pin structure 13, and the second section 1322 is wider and facilitate connection with the terminal 12. However, this will cause a sudden change in stress at the connection between the first section 1321 and the second section 1322, exacerbating the stress concentration at the side inner corner D of the pin structure 13.

In the above embodiments, by setting the opposite sides of the tab connecting part 131 and the second section 1322 transition smoothly, the stress is distributed more evenly in the connecting area of the opposite sides of the tab connecting part 131 and the second section 1322, thereby improving the stress concentration at the side inner corner D of the pin structure 13, so that the pin structure 13 is less likely to cracks, thereby reducing the cracking risk of the pin structure 13.

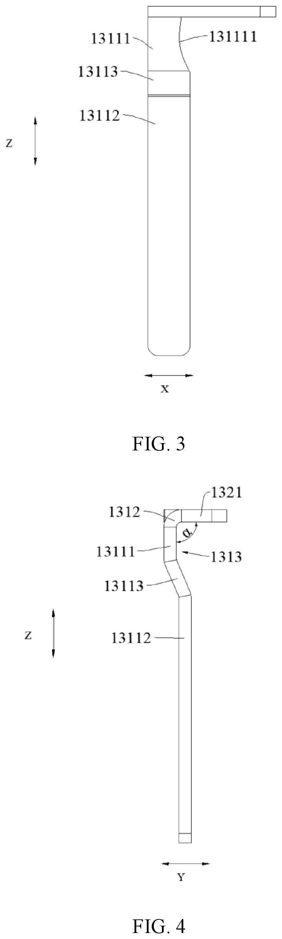

Referring to FIG. 4, in some embodiments, the angle α between the terminal connecting part 132 and the tab connecting part 131 ranges from 87° to 92°. It should be understood that the smaller the angle between the terminal connecting part 132 and the tab connecting part 131, the greater the bending amplitude between the terminal connecting part 132 and the tab connecting part 131, and the greater the angle between the terminal connecting part 132 and the tab connecting part 131, the smaller the bending amplitude between the terminal connecting part 132 and the tab connecting part 131. If the bending amplitude is too large, the deformation of the material at the bending position is more serious, and the bending position is prone to cracks or breaks. If the bending amplitude is too small, the pin structure 13 is prone to plastic deformation when subjected to force, and the bearing capacity and stiffness are weakened. Therefore, the angle between the terminal connecting part 132 and the tab connecting part 131 ranges from 87° to 92°, the pin structure 13 is less likely to crack or break, and the pin structure 13 has a higher bearing capacity and stiffness.

For example, the angle between the terminal connecting part 132 and the tab connecting part 131 may be 87°, 87.5°, 88°, 88.5°, 90°, 90.5°, 91°, 91.5°, 92°, and any value therebetween.

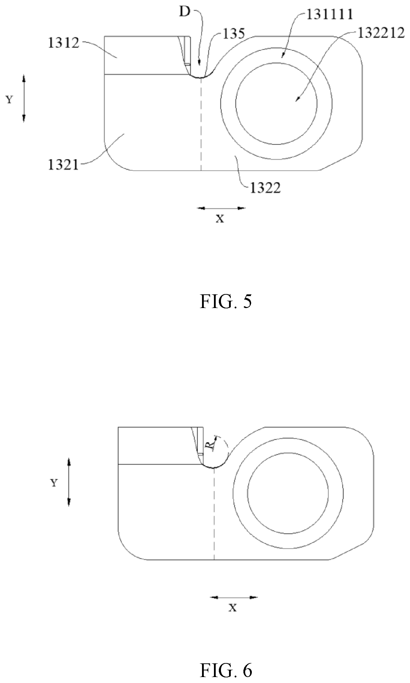

Referring to FIG. 1 and FIG. 2, and in combination with FIG. 5, the tab connecting part 131 and the second section 1322 define an arcuate transition portion 135 on opposite sides thereof, and smoothly transits through the arcuate transition portion 135. An orthographic projection of the arcuate transition portion 135 in the thickness direction of the terminal connecting part 132 (direction Z in the figure) is an arc, in other words, the arcuate transition portion 135 is an arc surface. In this way, compared with the transition section of curved surface, the arcuate transition portion 135 can evenly disperse the stress in the connection area of the opposite sides of the tab connecting part 131 and the second section 1322, thereby reducing the cracking risk of the pin structure 13.

In some embodiments, in the thickness direction of the terminal connecting part 132, the orthographic projection of the arcuate transition portion 135 is a circular arc, in other words, the arcuate transition portion 135 is a cylindrical surface. Compared with arcuate transition portions 135 of other forms, the cylindrical surface can evenly disperse the stress in the connecting area on the opposite sides of the tab connecting part 131 and the second section 1322, thereby greatly reducing the cracking risk of the pin structure 13.

Referring to FIG. 6, in some embodiments, the radius of the circular arc is R satisfying 1mm ≤ R ≤ 3mm. The radius of the circular arc is greater than or equal to 1 mm, the arc transition portion 135 can disperse the stress, and the pin structure 13 is not easy to crack. The radius of the circular arc is less than or equal to 13mm, which facilitates reducing the size of the pin structure 13. The pin structure 13 with a smaller size is configured in the battery 100, and its volume and weight are small, which facilitates improving the energy density of the battery 100. Therefore, the radius of the circular arc is between 1mm and 3mm, the pin structure 13 is not easy to crack and facilitates improving the energy density of the battery 100.

For example, the radius of the circular arc can be 1mm, 1.3mm, 1.4mm, 1.6mm, 1.7mm, 1.8mm, 1.9mm, 2mm, 2.1mm, 2.2mm, 2.3mm, 2.4mm, 2.5mm, 2.6mm, 2.9mm, 3mm, and any value therebetween.

Referring to FIG. 2, in some embodiments, the tab connecting part 131 includes a body section 1311 and a bending section 1312. The tab connecting part 131 is connected, by bending, to the first section 1321 through the bending section 1312. The body section 1311 is connected to an end of the bending section 1312 away from the first section 1321. The bending section 1312 and the second section 1322 have a smooth transition on opposite sides.

It can be understood that the second side surface 134 includes the side surface of the bent section 1312, and at the position of the side inner corner D, the side surface of the bent section 1312 smoothly transitions with a first side 131111 of the second section 1322. By making the opposite sides of the bent section 1312 and the second section 1322 smoothly transit, the processing difficulty of the transition portion between the first side surface 133 and the second side surface 134 can be reduced, and the difficulty of manufacturing the pin structure 13 can be reduced.

Referring to FIG. 2 to FIG. 4, in some embodiments, the body section 1311 includes a first straight section 13111, a second straight section 13112, and a connecting section 13113. The first straight section 13111 and the second straight section 13112 are arranged in the thickness direction (direction Z in the figure) of the terminal connecting part 132 and are connected in sequence. Specifically, the first straight section 13111 is connected to an end of the bending section 1312 away from the first section 1321, the connecting section 13113 is connected to an end of the first straight section 13111 away from the bending section 1312, and the second straight section 13112 is connected to an end of the connecting section 13113 away from the first straight section 13111.

The first section 1321 is arranged opposite to the connecting section 13113, and the first section 1321, the bent section 1312, the first straight section 13111 and the connecting section 13113 define an avoidance groove 1313.

The avoidance groove 1313 can avoid the tab 32 of the cell 30, thereby reducing the pressure from the tab connecting part 131 to the tab 32.

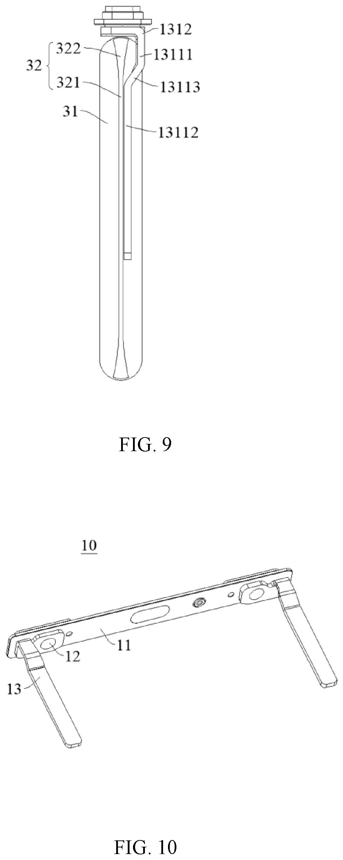

Referring to FIG. 9, when the cell 30 is a wound electrode assembly and tab 32 has a bending area 322, the avoidance groove 1313 can especially avoid the bending area 322 of tab 32, thereby reducing the cracking risk of the bending area 322 of tab 32.

In some embodiments, the side surfaces of the first straight section 13111 and the bent section 1312 close to the second section 1322 transition smoothly. It can be understood that the second side surface 134 may also include the side surface of the first straight section 13111.

In the above embodiment, the side surfaces of the first straight section 13111 and the bent section 1312 close to the second section 1322 transition smoothly, so that side stresses of the bent section 1312 and the first straight section 13111 are more uniform, thereby reducing the cracking risk of the pin structure 13.

Referring to FIG. 3, in some embodiments, the first straight section 13111 has a first side 131111 close to the second section 1322, and in the thickness direction (direction Y in the figure) of the tab connecting part 131, an orthographic projection of the first side 131111 is a concave arc. Such a configuration facilitates achieving a smooth transition of the side surfaces of the first straight section 13111 and the bent section 1312 close to the second section 1322, thereby reducing the difficulty of processing.

Referring to FIG. 3 again, in some embodiments, in the extending direction of the tab connecting part 131, the first straight section 13111 has a width gradually increases from the middle to each of two ends of the first straight section 13111. It can be understood that the end of the first straight section 13111 connected to the bent section 1312 and the end of the first straight section 13111 connected to the connection section 13113 are both greater, and the middle portion of the first straight section 13111 is narrower.

In the above embodiment, the end of the first straight section 13111 connected to the bent section 1312 is greater, so that the first straight section 13111 and the bent section 1312 have a higher connection strength. The end of the first straight section 13111 connected to the connecting section 13113 is greater, so that the first straight section 13111 and the connecting section 13113 have a higher connection strength.

As shown in FIG. 3, it can be understood that the first straight section 13111 is greater at an upper part and a lower part and narrower at the middle part.

In some embodiments, the second section 1322 is provided with a terminal mounting hole 13221 for mounting the terminal 12.

The shape of the terminal mounting hole 13221 is adapted to the shape of the terminal 12. The terminal mounting hole 13221 can be configured to be circular, square, oval, etc.

Optionally, the terminal mounting hole 13221 is configured as a round hole.

The terminal mounting hole 13221 may be configured as a blind hole, or as a through hole. Optionally, the terminal mounting hole 13221 may be configured as a through hole.

Among them, the terminal mounting hole 13221 can be constructed as a stepped hole, a straight hole, etc.

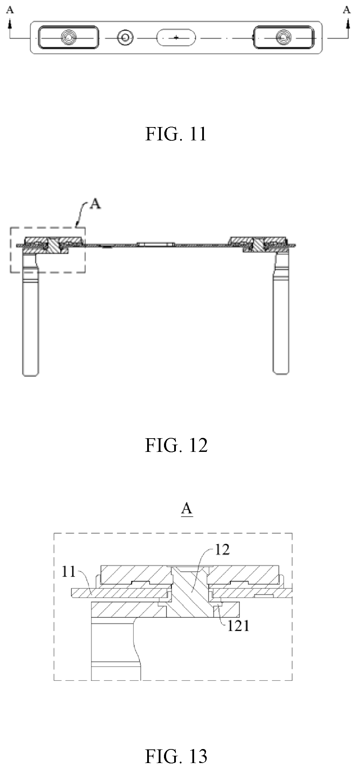

Referring to FIG. 2 and FIG. 5, and in combination with FIG. 13, in some embodiments, the terminal mounting hole 13221 is a stepped hole including a first hole section 132211 and a second hole section 132212. The second hole section 132212 is closer to the tab connecting part 131 than the first hole section 132211, and the cross-sectional area of the first hole section 132211 is greater than the cross-sectional area of the second hole section 132212, so that a step is formed between the first hole section 132211 and the second hole section 132212.

In the above embodiment, the terminal mounting hole 13221 is constructed as a stepped hole, which can increase the contact area between the hole wall of the terminal mounting hole 13221 and the terminal 12, thereby improving the connection stability between the terminal 12 and the pin structure 13.

Some embodiments of the present application also provides a pin structure 13, which includes a terminal connecting part 132 and a tab connecting part 131. The terminal connecting part 132 includes a first section 1321 and a second section 1322 which are arranged in the extending direction of the terminal connecting part 132. The width of the first section 1321 is less than that of the second section 1322. The second section 1322 is provided with a terminal mounting hole 13221, which is a stepped hole. The smaller end of the stepped hole is closer to the tab connecting part 131. The tab connecting part 131 includes a main section 1311 and a bending section 1312, and the main section 1311 is connected, by bending, to the terminal connecting part 132 through the bending section 1312. The thickness direction of the main section 1311 is perpendicular to the thickness direction of the terminal connecting part 132. Near the side inner corner D, the side surface of the second section 1322 transitions to the side surface of the first straight section 13111 in an arc shape, and the opposite sides of the second section 1322 and the first straight section 13111 define an arc transition portion with a radius ranging from 1 mm to 3 mm.

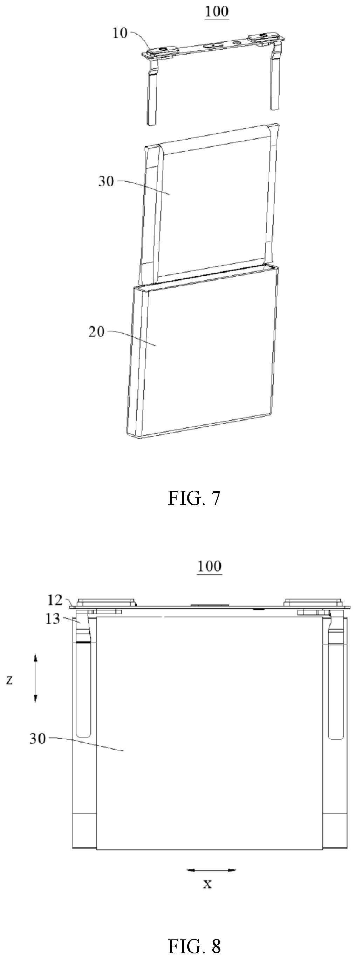

Referring to FIG. 7 to FIG. 13, and in combination with FIG. 1 to FIG. 6, an embodiment of the present application further provides a battery 100, which includes a housing 20, a cell 30, and an end cap assembly 10.

The cell 30 is accommodated in the housing 20. The cell 30 may be a wound electrode assembly, and may be configured in a flat shape. Specifically, the cell 30 may include a body 3121 and two tabs 32 with opposite polarities, and the tabs 32 may be full tabs. In the extending direction of the winding axis of the cell 30, the two tabs 32 are respectively disposed on both sides of the body 3121. The tabs 32 may include a straight area 321 and a bending area 322.

The end cap assembly 10 may include an end cap 11, a pin structure 13 provided in the above embodiments, and two terminals 12 with opposite polarities. The end cap 11 covers the opening of the housing 20, and the end cap 11 and the housing 20 define an accommodation space for accommodating the cell 30. The terminal 12 may be mounted on the end cap 11 by a riveting block. The pin structure 13 is configured to implement an electrical connection between the tab 32 and the terminal 12 of the same polarity. The pin structure 13 that electrically connects the positive tab to the positive terminal may be understood as a positive pin structure, and the pin structure 13 that electrically connects the negative tab to the negative terminal may be understood as a negative pin structure.

In some embodiments, the thickness direction of the terminal connecting part 132 is parallel to the thickness direction of the end cap 11 (direction Z in the figure), and the thickness direction of the tab connecting part 131 is parallel to the thickness direction of the cell 30. The second straight section 13112 is welded to the straight area 321 of the tab 32, and an opening of the avoidance groove 1313 faces the bending area 322 of the tab 32 to avoid the bending area 322, so that the extrusion of the tab connecting part 131 on the bending area 322 is reduced. The terminal 12 is partially disposed in the terminal mounting hole 13221.

Referring to FIG. 13, in some embodiments, an outer peripheral surface of terminal 12 is provided with a flange 121 extending in an axial direction of the terminal 12. The terminal mounting hole 13221 is a stepped hole, and terminal 12 abuts against the step of terminal mounting hole 13221 through the flange 121. The terminal 12 is partially disposed in a first hole section 132211, and partially disposed in a second hole section 132212.

Some embodiments of the present application have been described in detail above. Specific examples are used in this disclosure to explain the principles and implementation methods of the present application. The description of the above embodiments aims only to help understand the methods and the core idea of the present application. Moreover, various changes in the specific implementation method and the application scope may occur to those skilled in the art based on the idea of the present application. In summary, the content of this specification should not be construed as limitation to the present application.

## Claims

1. A pin structure, comprising:
a terminal connecting part comprising a first section and a second section connected to each other, the first section having a width less than a width of the second section; and
a tab connecting part connected, by bending, to a side of the first section in a width direction of the first section and spaced apart from the second section, wherein a smooth transition is formed between opposite respective sides of the tab connecting part and the second section in a direction in which the terminal connecting part extends.

2. The pin structure according to claim 1, wherein an arcuate transition portion is defined by the opposite respective sides of the tab connecting part and the second section, the smooth transition is formed by the arcuate transition portion, and an orthographic projection of the arcuate transition portion in a thickness direction of the terminal connecting part is an arc.

3. The pin structure according to claim 2, wherein the orthographic projection of the arcuate transition portion in the thickness direction of the terminal connecting part is a circular arc.

4. The pin structure according to claim 3, wherein the circular arc has a radius R satisfying 1 mm ≤ R <_ 3 mm.

5. The pin structure according to any one of claims 1 to 4, wherein the tab connecting part comprises a body section and a bending section; the tab connecting part is connected, by bending, to the first section through the bending section; the body section is connected to an end of the bending section away from the first section; and the smooth transition is formed between opposite respective sides of the bending section and the second section.

6. The pin structure according to claim 5, wherein the body section comprises a first straight section, a second straight section and a connecting section; the first straight section is connected to the end of the bending section away from the first section; the connecting section is connected to an end of the first straight section away from the bending section; and the second straight section is connected to an end of the connecting section away from the first straight section; and
the first section is arranged opposite to the connecting section, and an avoidance groove is defined by the first section, the bending section, the first straight section and the connecting section.

7. The pin structure according to claim 6, wherein a smooth transition is formed between respective sides of the first straight section and the bending section close to the second section.

8. The pin structure according to claim 7, wherein the first straight section has a first side close to the second section, and an orthographic projection of the first side in a thickness direction of the tab connecting part is a concave arc.

9. The pin structure according to claim 8, wherein a width of the first straight section gradually increases from a middle of the first straight section to each of two ends of the first straight section in a direction in which the tab connecting part extends.

10. The pin structure according to any one of claims 1 to 9, wherein the second section is provided with a terminal mounting hole.

11. The pin structure according to claim 10, wherein the terminal mounting hole comprises a first hole section and a second hole section; and the second hole section is closer to the tab connecting part than the first hole section, and the first hole section has a cross-sectional area greater than a cross-sectional area of the second hole section, so that a step is formed between the first hole section and the second hole section.

12. A battery, comprising the pin structure according to any one of claims 1 to 11.
